(19) Europäisches Patentamt / European Patent Office / Office européen des brevets

(11) **EP 4 806 980 A1**

(12) **EUROPEAN PATENT APPLICATION**
published in accordance with Art. 153(4) EPC

(43) Date of publication:
**16.09.2026 Bulletin 2026/38**

(21) Application number: **24888537.8**

(22) Date of filing: **23.10.2024**

(51) International Patent Classification (IPC):
***C10M 169/04*** (2006.01) ***F16H 57/04*** (2010.01)
***C10M 101/02*** (2006.01) ***C10M 137/02*** (2006.01)
***C10M 139/00*** (2006.01) ***C10M 145/14*** (2006.01)
***C10M 159/22*** (2006.01) ***C10N 10/04*** (2006.01)
***C10N 20/02*** (2006.01) ***C10N 30/00*** (2006.01)
***C10N 30/02*** (2006.01) ***C10N 30/04*** (2006.01)
***C10N 30/06*** (2006.01) ***C10N 30/18*** (2006.01)
***C10N 40/00*** (2006.01) ***C10N 40/04*** (2006.01)

(52) Cooperative Patent Classification (CPC):
**C10M 169/04; F16H 57/04;** C10M 101/02; C10M 137/02; C10M 139/00; C10M 145/14; C10M 159/22; C10N 2010/04; C10N 2020/02; C10N 2030/00; C10N 2030/02; C10N 2030/04; C10N 2030/06; C10N 2030/18; C10N 2040/00;
(Cont.)

(86) International application number:
**PCT/JP2024/037774**

(87) International publication number:
**WO 2025/100239 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.11.2023 JP 2023190541**

(71) Applicants:
- **ENEOS Corporation**
  **Chiyoda-ku**
  **Tokyo 100-8162 (JP)**
- **JATCO Ltd**
  **Fuji-shi, Shizuoka 417-8585 (JP)**

(72) Inventors:
- **KOMATSUBARA, Hitoshi**
  **Tokyo 100-8162 (JP)**
- **SASAKI, Ryo**
  **Tokyo 100-8162 (JP)**
- **MAEDA, Makoto**
  **Fuji-shi, Shizuoka 417-8585 (JP)**
- **KATOU, Gou**
  **Fuji-shi, Shizuoka 417-8585 (JP)**
- **ISHIGAMI, Kazunori**
  **Fuji-shi, Shizuoka 417-8585 (JP)**

(74) Representative: **Müller-Boré & Partner Patentanwälte PartG mbB**
**Friedenheimer Brücke 21**
**80639 München (DE)**

(54) **GEAR-TYPE TRANSMISSION FOR ELECTROMOTIVE MOBILITY, LUBRICATING OIL COMPOSITION FOR GEAR-TYPE TRANSMISSION FOR ELECTROMOTIVE MOBILITY, AND METHOD FOR LUBRICATING GEAR-TYPE TRANSMISSION FOR ELECTROMOTIVE MOBILITY USING SAME**

(57) A gear-type transmission for e-mobility, comprising a lubricating oil composition for lubricating a sliding portion, and a joint portion using, at least in part, a form-in-place gasket containing silicone as a sealing member for the lubricating oil composition, wherein the lubricating oil composition contains specific components (A) to (F) and is a lubricating oil composition that satisfies all of specific conditions (i) to (vi).

(52) Cooperative Patent Classification (CPC): (Cont.)
C10N 2040/04

## Description

Technical Field

The present invention relates to a gear-type transmission for e-mobility, a lubricating oil composition for a gear-type transmission for e-mobility, and a method for lubricating a gear-type transmission for e-mobility using the same.

Background Art

Conventionally, in the field of gear-type transmissions, such as reducers, increasers, multi-stage transmissions, and the like that use gears, there has been a demand for lower viscosity of lubricating oil compositions to be used for the purpose of improving fuel economy. Particularly, for gear-type transmissions for e-mobility (for example, electric vehicles and other such electric vehicles, etc.) (for example, reducers for small, ultra-high-speed motors, etc.), a further reduction in the viscosity of lubricating oil compositions is required in order to improve power consumption efficiency. Moreover, lubricating oil compositions used in gear-type transmissions for e-mobility are required to improve gear and bearing durability and to have high electrical insulation properties that are compatible with direct cooling of the motor provided in the e-mobility other than improving power consumption efficiency.

In order to meet such demands, various lubricating oil compositions have been conventionally studied for use in gear-type transmissions for e-mobility. As an example of such a lubricating oil composition, for example, International Publication No. WO 2020/189580 (PTL 1) discloses, as a lubricating oil composition used in the powertrain of an electric vehicle, a lubricating oil composition comprising: a lubricating base oil; an alkaline earth metal detergent in an amount of 10 mass ppm or more and 1000 mass ppm or less in terms of the amount of alkaline earth metal based on the total amount of the lubricating oil composition; a specific triazole-based compound in an amount of 0.005% by mass or more and 0.90% by mass or less based on the total amount of the lubricating oil composition; at least one sulfur-containing compound selected from sulfur-containing heterocyclic ether compounds and sulfide compounds in an amount of 10 mass ppm or more and 2000 mass ppm or less in terms of the amount of sulfur based on the total amount of the lubricating oil composition; and an ashless dispersant in an amount of 0.010% by mass or more and 4.0% by mass or less based on the total amount of the lubricating oil composition, and furthermore, as a preferred form thereof, a lubricating oil composition further comprising a phosphorus-based compound in an amount of 100 to 1500 mass ppm in terms of the amount of phosphorus element based on the total amount of the lubricating oil composition is disclosed. Note that in PTL 1, all of the compositions disclosed as Examples of the lubricating oil composition (Examples 1 to 31) are in a form containing one type of phosphorus-based compound.

Citation List

Patent Literature

PTL 1: International Publication No. WO 2020/189580

Summary of Invention

Technical Problem

However, even with conventional lubricating oil compositions such as those described in PTL 1, when used for a gear-type transmission for e-mobility (for example, a reducer for an electric vehicle, etc.) provided with a joint portion that uses, at least in part, a form-in-place gasket containing silicone (hereinafter, the form-in-place gasket containing silicone may be simply referred to as a "silicone-containing FIPG" for convenience) as a sealing member for the lubricating oil composition, there has been room for improvement in terms of highly suppressing the degradation of the silicone-containing FIPG during use of the gear-type transmission, and keeping the foaming during use to a specific level or less.

The present invention has been made in view of the problems of the related art, and an object thereof is: (1) to provide a gear-type transmission for e-mobility that can highly suppress the degradation of a silicone-containing FIPG caused by the lubricating oil composition during use of the gear-type transmission and can keep the foaming of the lubricating oil composition during use of the gear-type transmission to a specific level or less, and that can also achieve both an improvement in power consumption efficiency and an improvement in fatigue life; (2) to provide a lubricating oil composition for a gear-type transmission for e-mobility that can highly suppress the degradation of a silicone-containing FIPG and can keep foaming during use to a specific level or less, and that, while having a low viscosity and being capable of improving power consumption efficiency, can also improve both extreme pressure performance based on anti-wear performance and seizure resistance performance as well as fatigue life, and that can also have the high electrical

insulation properties required for lubricating oils for e-mobility; and (3) to provide a method for lubricating a gear-type transmission for e-mobility using the lubricating oil composition.

Solution to Problem

As a result of conducting earnest studies in order to achieve the above-described object, the present inventors have found that, in a gear-type transmission for e-mobility comprising: a lubricating oil composition for lubricating sliding portions; and a joint portion using, at least in part, a form-in-place gasket containing silicone (silicone-containing FIPG) as a sealing member for the lubricating oil composition; by establishing the lubricating oil composition to be one that contains the following components (A) to (F) and satisfies all of the following conditions (i) to (vi), it becomes possible to highly suppress the degradation of the silicone-containing FIPG caused by the lubricating oil composition during use of the gear-type transmission and to keep the foaming of the lubricating oil composition during use of the gear-type transmission to a specific level or less, while also making it possible to achieve both an improvement in power consumption efficiency and an improvement in fatigue life, and have thus completed the present invention.

That is, the present invention provides the following embodiments.

[1] A gear-type transmission for e-mobility, comprising a lubricating oil composition for lubricating a sliding portion, and a joint portion using, at least in part, a form-in-place gasket containing silicone as a sealing member for the lubricating oil composition, wherein

the lubricating oil composition comprises:

(A) a lubricating base oil that is a hydrocracked mineral oil having a kinematic viscosity at 40°C of 12.0 $mm^2/s$ or less and a kinematic viscosity at 100°C of 2.7 $mm^2/s$ or more;
(B) a first phosphorus-based additive containing at least one alkyl group in the structure, wherein all of the alkyl groups contained in the structure have 8 or less carbon atoms;
(C) a second phosphorus-based additive containing at least one alkyl group in the structure, wherein all of the alkyl groups contained in the structure have 14 or more carbon atoms;
(D) a calcium-based detergent;
(E) a boron-modified succinimide-based dispersant; and
(F) a poly(meth)acrylate,

and satisfies all of the following conditions (i) to (vi):

(i) a total amount of a content of the component (B) in terms of phosphorus atoms and a content of the component (C) in terms of phosphorus atoms is 0.025% by mass or more and 0.050% by mass or less based on a total mass of the lubricating oil composition;
(ii) a content of the component (B) in terms of phosphorus atoms based on the total mass of the lubricating oil composition is 2.0 times or more and 2.4 times or less a content of the component (C) in terms of phosphorus atoms based on the total mass of the lubricating oil composition;
(iii) a content of the component (D) in terms of calcium atoms is 0.009% by mass or more and 0.013% by mass or less based on the total mass of the lubricating oil composition;
(iv) a content of the component (E) in terms of boron atoms based on the total mass of the lubricating oil composition is 0.9 times or more and 1.2 times or less a content of the component (D) in terms of calcium atoms based on the total mass of the lubricating oil composition;
(v) a content of the component (F) is less than 0.1% by mass based on the total mass of the lubricating oil composition; and
(vi) the lubricating oil composition has a volume resistivity at 80°C of 50 $M\Omega\cdot m$ or more, a kinematic viscosity at 100°C of 2.7 $mm^2/s$ or more and 3.0 $mm^2/s$ or less, and a viscosity index of 100 or more.

[2] The gear-type transmission for e-mobility according to [1], wherein the component (B) is a phosphite ester in which all of the alkyl groups contained in the structure are alkyl groups having 8 or less carbon atoms.
[3] The gear-type transmission for e-mobility according to [1] or [2], wherein the component (C) is an amine salt of a phosphite ester in which all of the alkyl groups contained in the structure are alkyl groups having 14 or more carbon atoms.
[4] The gear-type transmission for e-mobility according to any one of [1] to [3], wherein the component (D) is at least one selected from the group consisting of a calcium sulfonate having a base number of 200 mg KOH/g or more, a

calcium phenate having a base number of 200 mg KOH/g or more, and a calcium salicylate having a base number of 200 mg KOH/g or more.

[5] The gear-type transmission for e-mobility according to any one of [1] to [4], wherein the component (F) has a weight-average molecular weight of 60,000 or less.

[6] A lubricating oil composition used for lubricating a sliding portion of a gear-type transmission for e-mobility provided with a joint portion using, at least in part, a form-in-place gasket containing silicone as a sealing member for the lubricating oil composition, wherein

the lubricating oil composition comprises:

(A) a lubricating base oil that is a hydrocracked mineral oil having a kinematic viscosity at 40°C of 12.0 $mm^2/s$ or less and a kinematic viscosity at 100°C of 2.7 $mm^2/s$ or more;
(B) a first phosphorus-based additive containing at least one alkyl group in the structure, wherein all of the alkyl groups contained in the structure have 8 or less carbon atoms;
(C) a second phosphorus-based additive containing at least one alkyl group in the structure, wherein all of the alkyl groups contained in the structure have 14 or more carbon atoms;
(D) a calcium-based detergent;
(E) a boron-modified succinimide-based dispersant; and
(F) a poly(meth)acrylate,

and satisfies all of the following conditions (i) to (vi):

(i) a total amount of a content of the component (B) in terms of phosphorus atoms and a content of the component (C) in terms of phosphorus atoms is 0.025% by mass or more and 0.050% by mass or less based on a total mass of the lubricating oil composition;
(ii) a content of the component (B) in terms of phosphorus atoms based on the total mass of the lubricating oil composition is 2.0 times or more and 2.4 times or less a content of the component (C) in terms of phosphorus atoms based on the total mass of the lubricating oil composition;
(iii) a content of the component (D) in terms of calcium atoms is 0.009% by mass or more and 0.013% by mass or less based on the total mass of the lubricating oil composition;
(iv) a content of the component (E) in terms of boron atoms based on the total mass of the lubricating oil composition is 0.9 times or more and 1.2 times or less a content of the component (D) in terms of calcium atoms based on the total mass of the lubricating oil composition;
(v) a content of the component (F) is less than 0.1% by mass based on the total mass of the lubricating oil composition; and
(vi) the lubricating oil composition has a volume resistivity at 80°C of 50 $M\Omega \cdot m$ or more, a kinematic viscosity at 100°C of 2.7 $mm^2/s$ or more and 3.0 $mm^2/s$ or less, and a viscosity index of 100 or more.

[7] A method for lubricating a gear-type transmission for e-mobility, comprising lubricating a sliding portion of a gear-type transmission for e-mobility provided with a joint portion using, at least in part, a form-in-place gasket containing silicone as a sealing member for the lubricating oil composition with the lubricating oil composition for a gear-type transmission for e-mobility according to [6].

The reason why the above-described object is achieved by the gear-type transmission for e-mobility of the present invention is not necessarily clear, but the present inventors presume as follows.

That is, first, the case of using a conventional lubricating oil composition with reduced viscosity that contains a phosphorus-based additive in a gear-type transmission for e-mobility (for example, a reducer for an electric vehicle) having a silicone-containing FIPG at a joint portion will be explained; generally, when a lubricating oil composition is brought into contact with a silicone-containing FIPG, the lower the viscosity of the composition, the more easily the lubricating oil composition (especially the base oil) penetrates into the silicone-containing FIPG, and the silicone-containing FIPG tends to swell. When a low-viscosity lubricating oil composition penetrates into a silicone-containing FIPG, silicon tends to dissolve and elute into the lubricating oil composition, particularly due to the oxide of the phosphorus-based additive (phosphoric acid) generated in the composition during use. For this reason, conventional lubricating oil compositions that have reduced viscosity and contain a phosphorus-based additive were themselves one of the causes of a decrease in the strength of the silicone-containing FIPG (one of the causes of FIPG degradation). Since such a decrease in the strength of the FIPG causes problems such as oil leakage or oil seepage from the joint portion, improvement of conventional lubricating oil compositions has been demanded. The present inventors have also found through their research that when silicon elutes into the lubricating oil composition as described above, it becomes a substance that causes foaming of the

lubricating oil composition, and when the additive is a poly(meth)acrylate, depending on the amount used or the like, it also causes foaming of the lubricating oil composition.

Therefore, in the gear-type transmission for e-mobility of the present invention, a specific lubricating oil composition that contains the components (A) to (F) and satisfies all of the conditions (i) to (vi) is used to lubricate the sliding portions. The present inventors have found that by using such a lubricating oil composition, even if a phosphorus-based additive is used, the aggressiveness toward the silicone-containing FIPG can be highly suppressed, although the reason is not necessarily clear, thereby making it possible to highly prevent the degradation of the FIPG, and in combination with the amounts of other additives used and other factors, it is possible to keep the foaming of the lubricating oil composition during use to a specific level or less. Note that by keeping the foaming of the lubricating oil composition during use to a specific level or less, it is also possible to highly suppress a situation where oil spouts from the breather of the gear-type transmission. The gear-type transmission for e-mobility of the present invention can also improve the power consumption efficiency of e-mobility (for example, electric vehicles and other such electric automobiles) because the kinematic viscosity of the lubricating oil composition used is low. The gear-type transmission for e-mobility of the present invention has high levels of anti-wear performance, seizure resistance performance, and suppressive performance of fatigue life by specifying the type of base oil, the formulation of additives, and the like in the lubricating oil composition used. Furthermore, the gear-type transmission for e-mobility of the present invention can also set the electrical insulation properties to a high level by setting the volume resistivity at 80°C to a specific level or higher by specifying the formulation of additives and the like in the lubricating oil composition used. From these viewpoints, the present inventors presume that the gear-type transmission for e-mobility of the present invention can highly suppress the degradation of the silicone-containing FIPG caused by the lubricating oil composition during use of the gear-type transmission, can keep the foaming of the lubricating oil composition during use of the gear-type transmission to a specific level or less, and can also achieve both an improvement in power consumption efficiency and an improvement in the durability of gears, bearings, and the like (improvement in fatigue life).

Advantageous Effects of Invention

The present invention makes it possible: (1) to provide a gear-type transmission for e-mobility that can highly suppress the degradation of a silicone-containing FIPG caused by the lubricating oil composition during use of the gear-type transmission and can keep the foaming of the lubricating oil composition during use of the gear-type transmission to a specific level or less, and that can also achieve both an improvement in power consumption efficiency and an improvement in fatigue life; (2) to provide a lubricating oil composition for a gear-type transmission for e-mobility that can highly suppress the degradation of a silicone-containing FIPG and can keep foaming during use to a specific level or less, and that, while having a low viscosity and being capable of improving power consumption efficiency, can also improve both extreme pressure performance based on anti-wear performance and seizure resistance performance as well as fatigue life, and that can also have the high electrical insulation properties required for lubricating oils for e-mobility; and (3) to provide a method for lubricating a gear-type transmission for e-mobility using the lubricating oil composition.

Description of Embodiments

Hereinafter, the present invention will be described in detail based on preferred embodiments thereof. Note that in the present specification, regarding numerical values X and Y, description "X to Y" is intended to mean "X or more and Y or less" unless otherwise noted. In such description, in the case where unit is attached to only the numerical value Y, the unit is intended to apply also to the numerical value X.

[Gear-Type Transmission for E-Mobility]

The gear-type transmission for e-mobility of the present invention is a gear-type transmission for e-mobility comprising a lubricating oil composition for lubricating a sliding portion, and a joint portion using, at least in part, a form-in-place gasket containing silicone as a sealing member for the lubricating oil composition, wherein

the lubricating oil composition comprises:

(A) a lubricating base oil that is a hydrocracked mineral oil having a kinematic viscosity at 40°C of 12.0 $mm^2/s$ or less and a kinematic viscosity at 100°C of 2.7 $mm^2/s$ or more;
(B) a first phosphorus-based additive containing at least one alkyl group in the structure, wherein all of the alkyl groups contained in the structure have 8 or less carbon atoms;
(C) a second phosphorus-based additive containing at least one alkyl group in the structure, wherein all of the alkyl groups contained in the structure have 14 or more carbon atoms;

(D) a calcium-based detergent;
(E) a boron-modified succinimide-based dispersant; and
(F) a poly(meth)acrylate,

and satisfies all of the following conditions (i) to (vi):

(i) a total amount of a content (% by mass) of the component (B) in terms of phosphorus atoms and a content of the component (C) in terms of phosphorus atoms is 0.025% by mass or more and 0.050% by mass or less based on a total mass of the lubricating oil composition;
(ii) a content (% by mass) of the component (B) in terms of phosphorus atoms based on the total mass of the lubricating oil composition is 2.0 times or more and 2.4 times or less a content (% by mass) of the component (C) in terms of phosphorus atoms based on the total mass of the lubricating oil composition;
(iii) a content of the component (D) in terms of calcium atoms is 0.009% by mass or more and 0.013% by mass or less based on the total mass of the lubricating oil composition;
(iv) a content (% by mass) of the component (E) in terms of boron atoms based on the total mass of the lubricating oil composition is 0.9 times or more and 1.2 times or less a content (% by mass) of the component (D) in terms of calcium atoms based on the total mass of the lubricating oil composition;
(v) a content of the component (F) is less than 0.1% by mass based on the total mass of the lubricating oil composition; and
(vi) the lubricating oil composition has a volume resistivity at 80°C of 50 MΩ·m or more, a kinematic viscosity at 100°C of 2.7 $mm^2/s$ or more and 3.0 $mm^2/s$ or less, and a viscosity index of 100 or more.

Note that in the present specification, "e-mobility" refers to a moving object that travels or flies by driving drive wheels or the like using an electric motor as a drive source, and includes so-called electric vehicles such as two-wheeled or four-wheeled vehicles (for example, electric automobiles). In the present specification, "gear-type transmission" is a concept that includes reducers, increasers, and multi-stage transmissions. Hereinafter, first, the lubricating oil composition provided in the gear-type transmission for e-mobility of the present invention will be described.

<Regarding Lubricating Oil Composition>

As described above, the lubricating oil composition according to the present invention contains the components (A) to (F) and satisfies all of the conditions (i) to (vi). Here, the components used in the lubricating oil composition according to the present invention will be described.

<Regarding Components in Lubricating Oil Composition>

[Component (A): Lubricating Base Oil]

The lubricating base oil contained as component (A) in the lubricating oil composition is a hydrocracked mineral oil having a kinematic viscosity at 40°C of 12.0 $mm^2/s$ or less and a kinematic viscosity at 100°C of 2.7 $mm^2/s$ or more.

Such a hydrocracked mineral oil may be any oil that satisfies the conditions of having a kinematic viscosity at 40°C of 12.0 $mm^2/s$ or less and a kinematic viscosity at 100°C of 2.7 $mm^2/s$ or more, and it may be composed of only one type of hydrocracked mineral oil that satisfies such conditions, or it may be composed of a mixture of two or more types of hydrocracked mineral oils mixed to satisfy such conditions.

Such a hydrocracked mineral oil may be any oil obtained by subjecting a so-called mineral oil to a hydrocracking process, is not particularly limited, and known hydrocracked mineral oils can be used as appropriate; among these, it is preferable that the mineral oil is: a mineral oil obtained by hydrocracking a vacuum gas oil (WVGO), a mild hydrocracking (MHC) treated oil of WVGO, a deasphalted oil (DAO), an MHC treated oil of DAO, or a mixed oil thereof, and subjecting the product or a lubricating oil fraction recovered from the product by distillation or the like to a dewaxing treatment; or a mineral oil obtained by further distilling that mineral oil (note that the methods for various treatments such as "hydrocracking" and "dewaxing treatment" mentioned herein are not particularly limited, and known methods can be adopted as appropriate).

The hydrocracked mineral oil, which is the lubricating base oil (component (A)), must have a kinematic viscosity at 40°C of 12.0 $mm^2/s$ or less. When the kinematic viscosity at 40°C is 12.0 $mm^2/s$ or less, the viscosity of the lubricating oil composition can be lowered compared to when it exceeds 12.0 $mm^2/s$, and it becomes possible to reduce stirring loss particularly at low temperatures (25°C); therefore, high performance (effect) in terms of power consumption efficiency can be obtained, and it becomes possible to highly suppress foaming of the composition during use (to achieve a high level of foam release property). The kinematic viscosity at 40°C of such a hydrocracked mineral oil is preferably 9.0 $mm^2/s$ or more and 12.0 $mm^2/s$ or less, and more preferably 10.0 $mm^2/s$ or more and 11.0 $mm^2/s$ or less. When the kinematic viscosity at

40°C is equal to or more than the lower limit, it becomes possible to further improve oil film formability at lubricating portions and to achieve even better lubricity compared to when it is less than the lower limit, and there is a tendency for the evaporation loss of the lubricating oil composition to be further reduced.

The hydrocracked mineral oil, which is the lubricating base oil (component (A)), must have a kinematic viscosity at 100°C of 2.7 $mm^2/s$ or more. By setting the value of the kinematic viscosity at 100°C of the hydrocracked mineral oil to 2.7 $mm^2/s$ or more, oil film formation performance at lubricating portions becomes higher compared to when it is less than 2.7 $mm^2/s$, and it becomes possible to improve anti-wear performance and bearing fatigue life, as well as to improve seizure resistance. The kinematic viscosity at 100°C of such a hydrocracked mineral oil is preferably 2.7 $mm^2/s$ or more and 3.0 $mm^2/s$ or less, and more preferably 2.75 $mm^2/s$ or more and 2.90 $mm^2/s$ or less. When the kinematic viscosity at 100°C is equal to or less than the upper limit, there is a tendency for a further higher effect to be obtained in terms of improving power consumption efficiency compared to when it exceeds the upper limit. Note that in the present specification, "kinematic viscosity at 40°C" and "kinematic viscosity at 100°C" of a lubricating base oil and a lubricating oil composition mean the kinematic viscosity at each temperature (40°C or 100°C) as specified in JIS K 2283-2000.

The hydrocracked mineral oil preferably has a sulfur content (sulfur content) of 30 mass ppm or less (more preferably 1 to 10 mass ppm). By setting the sulfur content to the upper limit or less, it becomes possible to improve oxidation stability compared to when it exceeds the upper limit. On the other hand, by setting the sulfur content to the lower limit or more, seizure resistance and anti-wear performance are improved compared to when it is less than the lower limit, and it becomes possible to improve durability reliability. The "sulfur content" can be determined by conducting a measurement in accordance with ASTM D4951.

Furthermore, the hydrocracked mineral oil preferably has a viscosity index of 80 or more (more preferably 90 or more, further preferably 95 or more, and particularly preferably 100 or more). By setting the viscosity index to the lower limit or more, a further higher effect can be obtained in terms of power consumption efficiency. Note that in the present specification, for the "viscosity index" of a lubricating base oil and a lubricating oil composition, a value measured in accordance with JIS K 2283-1993 is adopted.

For the hydrocracked mineral oil, at least one selected from the group consisting of Group II base oils and Group III base oils in the base oil classification by API (American Petroleum Institute) can be suitably used (hereinafter, the groups in the base oil classification by API are referred to simply as "API Groups"). An API Group II base oil is a base oil having a sulfur content of 0.03 mass% or less, a saturated content of 90 mass% or more, and a viscosity index of 80 or more and less than 120. An API Group III base oil is a base oil having a sulfur content of 0.03 mass% or less, a saturated content of 90 mass% or more, and a viscosity index of 120 or more. Furthermore, as the hydrocracked mineral oil, one type of base oil selected from among API Group II base oils and API Group III base oils may be used alone, or two or more types selected from among API Group II base oils and API Group III base oils may be used in combination as a mixed base oil. From the viewpoint of being able to easily adjust the viscosity characteristics to a desired range, as the hydrocracked mineral oil which is the lubricating base oil (component (A)), it is preferable to use a mixed oil obtained by mixing two or more types of base oils (two or more types of mineral oils obtained through a hydrocracking process), and among these, a mixed base oil of two or more types of API Group II base oils is more preferable.

[Component (B): First Phosphorus-Based Additive]

The first phosphorus-based additive, which is component (B), is a phosphorus-based additive that contains at least one alkyl group in its structure, wherein all of the alkyl groups contained in the structure have 8 or less carbon atoms. Such a phosphorus-based additive may be any additive that contains at least one alkyl group in its structure, wherein all of the alkyl groups contained in the structure have 8 or less carbon atoms, and known phosphorus-based additives used in the field of lubricating oil compositions that satisfy such conditions and contain phosphorus atoms as a constituent element can be used as appropriate.

All of the alkyl groups that can be contained in the structure of the compound used as the first phosphorus-based additive (component (B)) must have 8 or less carbon atoms (more preferably 2 to 6). By setting the number of carbon atoms in the alkyl group contained in such a first phosphorus-based additive to 8 or less, it becomes possible to highly suppress the aggressiveness toward the silicone-containing FIPG when combined with component (C), although the reason is not necessarily clear, thereby making it possible to highly suppress the degradation of the FIPG.

Examples of the compound used as such a first phosphorus-based additive (component (B)) include phosphite esters (phosphites), phosphate esters (phosphates), amine salts thereof, metal salts thereof, derivatives thereof, and the like, in which all of the alkyl groups in the structure are alkyl groups having 8 or less carbon atoms; among these, from the viewpoint of obtaining a further higher effect in terms of seizure resistance, wear resistance, and fatigue life improvement, a phosphite ester in which all of the alkyl groups contained in the structure are alkyl groups having 8 or less carbon atoms is preferable, a dialkyl phosphite ester (dialkyl phosphite) in which the number of carbon atoms in all of the alkyl groups is 8 or less is more preferable, and dibutyl phosphite is particularly preferable. Such a first phosphorus-based additive is not particularly limited, and a commercially available product may be used.

[Component (C): Second Phosphorus-Based Additive]

The second phosphorus-based additive, which is component (C), is a phosphorus-based additive that contains at least one alkyl group in its structure, wherein all of the alkyl groups contained in the structure have 14 or more carbon atoms. Such a phosphorus-based additive may be any additive that contains at least one alkyl group in its structure, wherein all of the alkyl groups contained in the structure have 14 or more carbon atoms, and known phosphorus-based additives used in the field of lubricating oil compositions that satisfy such conditions and contain phosphorus atoms as a constituent element can be used as appropriate.

All of the alkyl groups that can be contained in the structure of the compound used as the second phosphorus-based additive (component (C)) must have 14 or more carbon atoms (more preferably 16 to 20). By setting the number of carbon atoms in the alkyl group contained in such a second phosphorus-based additive to 14 or more, it becomes possible to highly suppress the aggressiveness toward the silicone-containing FIPG when combined with component (B), although the reason is not necessarily clear, thereby making it possible to highly suppress the degradation of the FIPG.

Examples of the compound used as such a second phosphorus-based additive (component (C)) include phosphite esters (phosphites), phosphate esters (phosphates), amine salts thereof, metal salts thereof, derivatives thereof, and the like, in which all of the alkyl groups in the structure are alkyl groups having 14 or more carbon atoms; among these, from the viewpoint of obtaining a further higher effect in terms of seizure resistance, wear resistance, and fatigue life improvement, an amine salt of a phosphite ester in which all of the alkyl groups contained in the structure are alkyl groups having 14 or more carbon atoms is preferable, and an amine salt of a dialkyl phosphite ester (dialkyl phosphite) in which the number of carbon atoms in all of the alkyl groups is 14 or more is more preferable. Such a second phosphorus-based additive is not particularly limited, and a commercially available product may be used.

[Component (D): Calcium-Based Detergent]

The calcium-based detergent, which is component (D), is not particularly limited, and known calcium-based detergents used in the field of lubricating oil compositions can be used as appropriate. Preferable examples of such calcium-based detergents include calcium sulfonate, calcium phenate, and calcium salicylate. The calcium-based detergent may be, for example, overbased with a carbonate (calcium carbonate). As such a calcium-based detergent, for example, the calcium-based detergents (sulfonate detergents, phenate detergents, salicylate detergents) described in paragraphs [0038] to [0053] of Japanese Unexamined Patent Application Publication No. 2020-76004 can be used as appropriate. One type of such calcium-based detergent may be used alone, or two or more types may be used in combination. A commercially available product may be used as such a calcium-based detergent.

The base number of the calcium-based detergent (component (D)) is preferably 200 mg KOH/g or more (more preferably 300 mg KOH/g or more and 500 mg KOH/g or less). By setting such a base number to the lower limit or more, a further higher effect can be obtained in terms of suppressing aggressiveness toward the FIPG compared to when it is less than the lower limit. In the present specification, the base number of the calcium-based detergent is a value measured by section 9 of JIS K 2501:2003 (a value measured by the perchloric acid method).

The calcium-based detergent (component (D)) is particularly preferably a calcium-based detergent consisting of at least one selected from the group consisting of a calcium sulfonate having a base number of 200 mg KOH/g or more, a calcium phenate having a base number of 200 mg KOH/g or more, and a calcium salicylate having a base number of 200 mg KOH/g or more.

[Component (E): Boron-Modified Succinimide-Based Dispersant]

The boron-modified succinimide-based dispersant, which is component (E), is not particularly limited, and known dispersants used as ashless dispersants comprising boron-modified succinimides in the field of lubricating oil compositions can be used as appropriate. Examples of such boron-modified succinimide-based dispersants include boron-modified succinimides obtained by modifying a succinimide having an alkenyl group or an alkyl group derived from a polyolefin with a boron compound such as boric acid or a borate salt.

As such a boron-modified succinimide-based dispersant, for example, those similar to the boron-modified succinimide-based dispersant described in Japanese Unexamined Patent Application Publication No. 2022-090378 or the boron-modified succinimide-based ashless dispersant (C) described in Japanese Unexamined Patent Application Publication No. 2009-108157 can be used as appropriate. One type of such boron-modified succinimide-based dispersant may be used alone, or two or more types may be used in combination. A commercially available product may be used as such a boron-modified succinimide-based dispersant.

[Component (F): Poly(meth)acrylate]

The poly(meth)acrylate as component (F) is not particularly limited, and known poly(meth)acrylates used as so-called viscosity index improvers, pour point depressants, and the like in the field of lubricating oil compositions can be used as appropriate. In the present specification, "(meth)acrylate" means acrylate and/or methacrylate.
The poly(meth)acrylate as component (F) is more preferably a poly(meth)acrylate-based pour point depressant (a poly(meth)acrylate used as a pour point depressant). Here, it is preferable that the poly(meth)acrylate as component (F) contains a poly(meth)acrylate-based pour point depressant (a poly(meth)acrylate used as a pour point depressant) and does not contain a poly(meth)acrylate-based viscosity index improver (a poly(meth)acrylate used as a viscosity index improver), since a further higher effect can be obtained from the viewpoint of suppressing foaming of the composition.
The poly(meth)acrylate as component (F) preferably has a weight-average molecular weight of 60,000 or less (more preferably 58,000 or less, and further preferably 50,000 to 57,000). By setting the weight-average molecular weight of the poly(meth)acrylate to the upper limit or less, there is a tendency for a further higher effect to be obtained in terms of suppressing foaming of the composition. The "weight-average molecular weight" mentioned herein means a value determined by gel permeation chromatography (GPC) (a molecular weight obtained by standard polystyrene conversion).
In such a component (F), one type of poly(meth)acrylate may be used alone, or two or more types of poly(meth) acrylates may be used in combination.

[Regarding Components Usable Other Than Components (A) to (F)]

The components usable in the lubricating oil composition according to the present invention are not limited to the components (A) to (F), and as long as the effects of the present invention are not impaired, other known components (for example, antioxidants, metal deactivators, rubber swelling agents, diluent oils, and the like) used in lubricating oil compositions for gear-type transmissions for e-mobility (for example, reducers for electric vehicles) may be used as appropriate. Such other components are not particularly limited, but for example, a commercially available performance additive (a so-called additive package: a mixture of multiple components) may be used.
The components in the lubricating oil composition according to the present invention have been described above; hereinafter, the composition, properties, and the like of the lubricating oil composition will be described.

<Regarding Composition, Properties, and the Like of Lubricating Oil Composition>

Hereinafter, first, the conditions (i) to (vi) regarding the lubricating oil composition according to the present invention will be described, and then other preferable conditions will be described.

[Regarding Condition (i)]

The lubricating oil composition according to the present invention must satisfy the condition (the condition (i)) that the total amount of the content of the component (B) in terms of phosphorus atoms and the content of the component (C) in terms of phosphorus atoms is 0.025% by mass or more and 0.050% by mass or less based on the total mass of the lubricating oil composition. When the total amount of the content of components (B) and (C) in terms of phosphorus atoms is equal to or more than the lower limit, it becomes possible to improve both extreme pressure performance based on anti-wear performance and seizure resistance performance, as well as fatigue life, compared to when it is less than the lower limit; on the other hand, when it is equal to or less than the upper limit, it becomes possible to suppress a decrease in volume resistivity and to maintain a high level of electrical insulation properties compared to when it exceeds the upper limit, and it is also possible to further highly prevent the degradation of the silicone-containing FIPG and to highly maintain the foaming of the lubricating oil composition during use at a specific level or less. The total amount of the content of the component (B) in terms of phosphorus atoms and the content of the component (C) in terms of phosphorus atoms is more preferably 0.025% by mass or more and 0.050% by mass or less (further preferably 0.030% by mass or more and 0.050% by mass or less) based on the total mass of the lubricating oil composition, since a further higher effect can be obtained from the same viewpoint.

[Regarding Condition (ii)]

The lubricating oil composition according to the present invention must satisfy the condition (the condition (ii)) that the content (% by mass) of the component (B) in terms of phosphorus atoms based on the total mass of the lubricating oil composition is 2.0 times or more and 2.4 times or less the content (% by mass) of the component (C) in terms of phosphorus atoms based on the total mass of the lubricating oil composition. In other words, when the content of the component (B) in terms of phosphorus atoms based on the total mass of the lubricating oil composition is "MP1" and the

content of the component (C) in terms of phosphorus atoms based on the total mass of the lubricating oil composition is "MP2," the value obtained by dividing MP1 by MP2 ([MP1]/[MP2]) must be 2.0 or more and 2.4 or less. By setting MP1 to 2 times or more of MP2 (the value of [MP1]/[MP2] to 2.0 or more), it becomes possible to improve extreme pressure performance while further highly preventing the degradation of the silicone-containing FIPG, and to highly maintain the foaming of the lubricating oil composition during use at a specific level or less, compared to when it is less than 2 times. On the other hand, by setting MP1 to 2.4 times or less of MP2 (the value of [MP1]/[MP2] to 2.4 or less), it becomes possible to obtain a high fatigue life improvement effect while highly preventing the degradation of the silicone-containing FIPG, and to highly maintain the foaming of the lubricating oil composition during use at a specific level or less, compared to when it exceeds 2.4 times. Furthermore, from the same viewpoint, it is more preferable that MP1 is 2.1 times or more and 2.3 times or less MP2, since a further higher effect can be obtained.

In the present invention, the first phosphorus-based additive (component (B)) and the second phosphorus-based additive (component (C)) are used by mixing them at a specific ratio so as to satisfy the above conditions (i) to (ii); this makes it possible to highly suppress the elution of silicon from the silicone-containing FIPG and the accompanying degradation (decrease in strength such as softening or peeling) of the silicone-containing FIPG that occurs when a phosphorus-based additive is used alone, and also to suppress foaming of the composition during use derived from the elution of silicon from the FIPG; therefore, it is possible to highly suppress the occurrence of problems such as oil spouting from the breather portion of the gear-type transmission (note that silicon is one of the substances that cause foaming of the composition, and when the amount of silicon eluted increases, suppression of foaming becomes difficult (the foam release property of the composition tends to decrease)). By setting the value of [MP1]/[MP2] within the above range, it is also possible to suppress a decrease in volume resistivity and to maintain a high level of electrical insulation properties, making it optimal for a gear-type transmission for e-mobility (particularly preferably a reducer for an electric vehicle).

[Regarding Condition (iii)]

The lubricating oil composition according to the present invention must satisfy the condition (the condition (iii)) that the content of the component (D) in terms of calcium atoms (the content of calcium atoms derived from component (D); hereinafter, simply referred to as "MCa" in some cases) is 0.009% by mass or more and 0.013% by mass or less based on the total mass of the lubricating oil composition. By setting MCa to 0.009% by mass or more, it becomes possible to improve fatigue life while highly preventing the degradation of the silicone-containing FIPG and highly maintaining the foaming of the lubricating oil composition during use at a specific level or less, compared to when it is less than 0.009% by mass. On the other hand, by setting MCa to 0.013% by mass or less, it becomes possible to improve wear resistance, seizure resistance, and fatigue life while highly preventing the degradation of the silicone-containing FIPG and highly maintaining the foaming of the lubricating oil composition during use at a specific level or less, compared to when it exceeds 0.013% by mass. By setting MCa to 0.013% by mass or less, it is also possible to suppress a decrease in volume resistivity and to maintain a high level of electrical insulation properties. Furthermore, from the same viewpoint, it is preferable that MCa is 0.010% by mass or more and 0.012% by mass or less, since a further higher effect can be obtained.

[Regarding Condition (iv)]

The lubricating oil composition according to the present invention must satisfy the condition (the condition (iv)) that the content of the component (E) in terms of boron atoms (% by mass) based on the total mass of the lubricating oil composition (the content of boron atoms derived from component (E); hereinafter, simply referred to as "MB" in some cases) is 0.9 times or more and 1.2 times or less the content of the component (D) in terms of calcium atoms (MCa (% by mass)) based on the total mass of the lubricating oil composition. That is, it is necessary to satisfy the condition that the value obtained by dividing MB by MCa ([MB]/[MCa]) is 0.9 or more and 1.2 or less. By setting MB to 0.9 times or more of MCa (the value of [MB]/[MCa] to 0.9 or more), it becomes possible to improve fatigue life while highly preventing the degradation of the silicone-containing FIPG and highly maintaining the foaming of the lubricating oil composition during use at a specific level or less, compared to when it is less than 0.9 times. On the other hand, by setting MB to 1.2 times or less of MCa (the value of [MB]/[MCa] to 1.2 or less), it becomes possible to improve fatigue life and extreme pressure performance while highly maintaining the foaming of the lubricating oil composition at a specific level or less, compared to when it exceeds 1.2 times. By setting MB to 1.2 times or less of MCa (the value of [MB]/[MCa] to 1.2 or less), it is also possible to suppress a decrease in volume resistivity and to maintain a high level of electrical insulation properties. From the same viewpoint, it is more preferable that MB is 1.1 times or more and 1.2 times or less MCa.

[Regarding Condition (v)]

The lubricating oil composition according to the present invention must satisfy the condition (the condition (v)) that the content of the component (F) is less than 0.1% by mass based on the total mass of the lubricating oil composition.

By setting the content of the poly(meth)acrylate, which is component (F), to less than 0.1% by mass, it becomes possible to highly suppress foaming of the composition, particularly during use. That is, if the amount of poly(meth)acrylate added exceeds the upper limit, foaming is likely to occur, and it becomes difficult to suppress foaming during use. The content of such a component (F) is more preferably 0.09% by mass or less (further preferably 0.07% by mass or less), since a further higher effect can be obtained from the same viewpoint.

[Regarding Condition (vi)]

The lubricating oil composition according to the present invention must satisfy the condition (the condition (vi)) that it has a volume resistivity at 80°C of 50 MΩ·m or more, a kinematic viscosity at 100°C of 2.7 $mm^2/s$ or more and 3.0 $mm^2/s$ or less, and a viscosity index of 100 or more.

As described in condition (vi), the lubricating oil composition according to the present invention must have a volume resistivity at 80°C of 50 MΩ·m or more (more preferably 51 MΩ·m or more and 55 MΩ·m or less). By setting such a volume resistivity to 50 MΩ·m or more, it becomes possible to provide high electrical insulation properties as required in the field of e-mobility (particularly in the field of electric vehicles). In the present specification, "volume resistivity" means the volume resistivity measured at an oil temperature of 80°C in accordance with the volume resistivity test specified in JIS C2101.

The lubricating oil composition according to the present invention, as described in the condition (vi), must have a kinematic viscosity at 100°C of the composition of 2.7 $mm^2/s$ or more and 3.0 $mm^2/s$ or less (more preferably 2.75 $mm^2/s$ or more and 2.90 $mm^2/s$ or less). By setting the kinematic viscosity at 100°C of the composition to the lower limit or more, it becomes possible to highly prevent the degradation of the silicone-containing FIPG and to highly maintain the foaming of the lubricating oil composition during use at a specific level or less, compared to when it is less than the lower limit. By setting the kinematic viscosity at 100°C of the composition to the upper limit or less, it becomes possible to improve power consumption efficiency compared to when it exceeds the upper limit.

The lubricating oil composition according to the present invention, as described in the condition (vi), must have a viscosity index of the composition of 100 or more (more preferably 103 or more). By setting the viscosity index of the composition to the lower limit or more, a further higher effect can be obtained in terms of power consumption efficiency compared to when it is less than the lower limit.

[Regarding Other Preferable Conditions]

The lubricating oil composition according to the present invention may be any composition that satisfies all of the conditions (i) to (vi) described above, and other conditions are not particularly limited, but it is more preferable that it satisfies the conditions described below.

In the lubricating oil composition according to the present invention, it is preferable that the content of the lubricating base oil (hydrocracked base oil), which is component (A), is 90% by mass or more and 98% by mass or less (more preferably 92% by mass or more and 97% by mass or less) based on the total mass of the lubricating oil composition. Furthermore, when the lubricating oil composition according to the present invention contains other components besides components (A) to (F), it is preferable that the content of such other components is 10% by mass or less (more preferably 3% by mass or more and 8% by mass or less) based on the total mass of the lubricating oil composition.

In the lubricating oil composition according to the present invention, it is preferable that the content of the component (B) is 0.10% by mass or more and 0.30% by mass or less (more preferably 0.12% by mass or more and 0.25% by mass or less) based on the total mass of the lubricating oil composition from the viewpoints such as improving seizure resistance, anti-wear performance, and fatigue life. Furthermore, in the lubricating oil composition according to the present invention, it is preferable that the content of the component (B) in terms of phosphorus atoms (MP1: content of phosphorus atoms derived from component (B)) is 0.015% by mass or more and 0.040% by mass or less (more preferably 0.020% by mass or more and 0.035% by mass or less) based on the total mass of the lubricating oil composition. When MP1 is equal to or more than the lower limit, there is a tendency for a further higher effect to be obtained in terms of improving seizure resistance, wear resistance, and fatigue life compared to when it is less than the lower limit; on the other hand, when it is equal to or less than the upper limit, there is a tendency for a further higher effect to be obtained in terms of improving seizure resistance, wear resistance, and fatigue life compared to when it exceeds the upper limit.

In the lubricating oil composition according to the present invention, it is preferable that the content of the component (C) is 0.30% by mass or more and 0.80% by mass or less (more preferably 0.35% by mass or more and 0.70% by mass or less) based on the total mass of the lubricating oil composition from the viewpoints such as improving seizure resistance, anti-wear performance, and fatigue life. Furthermore, in the lubricating oil composition according to the present invention, it is preferable that the content of the component (C) in terms of phosphorus atoms (MP2: content of phosphorus atoms derived from component (C)) is 0.008% by mass or more and 0.020% by mass or less (more preferably 0.009% by mass or more and 0.018% by mass or less) based on the total mass of the lubricating oil composition. When MP2 is equal to

or more than the lower limit, there is a tendency for a further higher effect to be obtained in terms of improving seizure resistance, wear resistance, and fatigue life compared to when it is less than the lower limit; on the other hand, when it is equal to or less than the upper limit, there is a tendency for a further higher effect to be obtained in terms of improving seizure resistance, wear resistance, and fatigue life compared to when it exceeds the upper limit.

Furthermore, in the lubricating oil composition according to the present invention, it is preferable that the content of the component (D) is 0.055% by mass or more and 0.130% by mass or less (more preferably 0.060% by mass or more and 0.120% by mass or less) based on the total mass of the lubricating oil composition.

In the lubricating oil composition according to the present invention, it is preferable that the content of the component (E) is 0.40% by mass or more and 0.80% by mass or less (more preferably 0.55% by mass or more and 0.65% by mass or less) based on the total mass of the lubricating oil composition. Furthermore, in the lubricating oil composition according to the present invention, it is preferable that the content of the component (E) in terms of boron atoms (MB) is 0.010% by mass or more and 0.017% by mass or less (more preferably 0.012% by mass or more and 0.015% by mass or less) based on the total mass of the lubricating oil composition. When MB is equal to or more than the lower limit, there is a tendency for a further higher effect to be obtained in terms of improving seizure resistance, wear resistance, and fatigue life compared to when it is less than the lower limit; on the other hand, when it is equal to or less than the upper limit, there is a tendency for a further higher effect to be obtained in terms of improving seizure resistance, wear resistance, and fatigue life compared to when it exceeds the upper limit.

The converted values in terms of calcium atoms, boron atoms, or phosphorus atoms regarding the content of each component described in the present specification may be calculated values when they can be determined by calculation from the type of raw materials used, the amount added, and the like.

The lubricating oil composition according to the present invention preferably has a kinematic viscosity at 40°C of the composition of 9.0 $mm^2/s$ or more and 12.0 $mm^2/s$ or less (more preferably 10.0 $mm^2/s$ or more and 11.0 $mm^2/s$ or less), since a further higher effect can be obtained in terms of power consumption efficiency.

The lubricating oil composition according to the present invention has been described above; hereinafter, the gear-type transmission for e-mobility of the present invention provided with such a lubricating oil composition will be described.

<Regarding Gear-Type Transmission for E-Mobility>

The gear-type transmission for e-mobility of the present invention may be any transmission that is provided with the lubricating oil composition according to the present invention described above as a lubricating oil composition for lubricating sliding portions and is provided with a joint portion using, at least in part, a form-in-place gasket containing silicone as a sealing member for the lubricating oil composition; the structure of the equipment other than that is not particularly limited, and a structure adopted in a known gear-type transmission for e-mobility (for example, a gear-type transmission for an electric vehicle, preferably a reducer for an electric vehicle, or the like) can be adopted as appropriate.

Here, the "joint portion using, at least in part, a form-in-place gasket containing silicone as a sealing member for the lubricating oil composition" may be any joint portion among the joint portions of the constituent members of the gear-type transmission for e-mobility that uses a silicone-containing FIPG for at least a part of the portion that serves as a seal for the joint portion in order to seal against leakage and the like of the lubricating oil composition to the outside. It is sufficient that there is at least one such "joint portion using, at least in part, a form-in-place gasket containing silicone as a sealing member for the lubricating oil composition" in the equipment of the gear-type transmission for e-mobility. The expression "as a sealing member for the lubricating oil composition" regarding the silicone-containing FIPG means that the silicone-containing FIPG is present at least in a portion that comes into contact with the lubricating oil composition and is used as a member for sealing the lubricating oil composition, and it may be one that seals internal air and the like together with the lubricating oil composition.

The sliding portion of such a gear-type transmission for e-mobility is not particularly limited and may be any portion within the gear-type transmission for e-mobility where the members constituting the device slide against each other; for example, a portion composed of members that move in contact with each other by rotational sliding or surface sliding, such as gears or bearings in a reducer of an electric vehicle (preferably an electric automobile), can be mentioned.

The joint portion of the gear-type transmission for e-mobility must be a joint portion sealed by using a silicone-containing FIPG for at least a part thereof, among the joint portions that need to be sealed by a gasket. The members constituting the joint portion that needs to be sealed by a silicone-containing FIPG for at least a part thereof may be members made of the same metal, or may be members made of different metals. The silicone-containing FIPG is not particularly limited, and a known one (such as one made of a known liquid gasket containing silicone (silicon resin), etc.) can be used as appropriate, and one formed from a commercially available product (for example, product name: 5460, manufactured by Henkel Corporation, etc.) may be used as appropriate. In the present specification, "formed-in-place gasket (FIPG)" refers to a liquid-curing type gasket formed by applying a liquid gasket to the portion to be sealed (adhering the sealing surface with a liquid gasket) and curing it.

In the present invention, although the lubricating oil composition has a low viscosity, it is possible to suppress the elution and the like of silicon from the silicone-containing FIPG during use and to highly suppress the degradation and the like of the FIPG; therefore, oil leakage (seepage) from the joint portion coated with the silicone-containing FIPG can be highly prevented. In the present invention, the lubricating oil composition can highly suppress the elution of silicon from the silicone-containing FIPG (dissolution/elution into the composition) during use as described above, and since the addition of poly(meth)acrylate (high-viscosity polymer) is kept below a specific amount, it is possible to highly suppress the foaming of the lubricating oil composition during use, and it is possible to highly suppress problems such as oil spouting from the breather portion. The gear-type transmission for e-mobility of the present invention is also excellent in terms of power consumption efficiency because the lubricating oil composition has a low viscosity. Furthermore, the gear-type transmission for e-mobility of the present invention improves seizure resistance and anti-wear performance, as well as the fatigue life of gears and bearings, because the lubricating oil composition is used such that the content and blending ratio of each component satisfy the conditions. Therefore, according to the present invention, in e-mobility, it is possible to highly suppress the degradation of the silicone-containing FIPG caused by the lubricating oil composition during use of the gear-type transmission, to keep the foaming of the lubricating oil composition during use of the gear-type transmission to a specific level or less, and to achieve both an improvement in power consumption efficiency and an improvement in fatigue life.

The gear-type transmission for e-mobility of the present invention has been described above; hereinafter, the lubricating oil composition for a gear-type transmission for e-mobility of the present invention and the method for lubricating a gear-type transmission for e-mobility of the present invention will be described.

[Lubricating Oil Composition for Gear-Type Transmission for E-Mobility and Method for Lubricating Gear-Type Transmission for E-Mobility]

The lubricating oil composition for a gear-type transmission for e-mobility of the present invention is a lubricating oil composition used for lubricating a sliding portion of a gear-type transmission for e-mobility provided with a joint portion using, at least in part, a form-in-place gasket containing silicone as a sealing member for the lubricating oil composition, wherein the lubricating oil composition contains the components (A) to (F) and satisfies all of the conditions (i) to (vi).

The method for lubricating a gear-type transmission for e-mobility of the present invention is a method of lubricating a sliding portion of a gear-type transmission for e-mobility provided with a joint portion using, at least in part, a form-in-place gasket containing silicone as a sealing member for the lubricating oil composition with the lubricating oil composition for a gear-type transmission for e-mobility of the present invention.

Such a lubricating oil composition for a gear-type transmission for e-mobility of the present invention is the same as that described as the lubricating oil composition provided in the gear-type transmission for e-mobility of the present invention (the preferable conditions are also the same). Therefore, by using the lubricating oil composition for a gear-type transmission for e-mobility of the present invention to lubricate a sliding portion of a gear-type transmission for e-mobility (for example, a reducer for an electric vehicle) provided with a joint portion using, at least in part, a form-in-place gasket containing silicone as a sealing member, even if the lubricating oil composition comes into contact with the silicone-containing FIPG, it is possible to highly suppress the degradation of the silicone-containing FIPG, the elution of silicon, and the like; therefore, it is possible to lubricate the sliding portion of the gear-type transmission for e-mobility while highly suppressing leakage and the like of the lubricating oil composition from the joint portion.

Examples

Hereinafter, the present invention will be described in more detail based on Examples and Comparative Examples; however, the present invention is not limited to Examples given below.

(Regarding Components Used in Each Example and the Like)

First, base oils and additives used in each Example and the like will be presented below.

[Regarding Base Oils (Hydrocracked Mineral Oils) Used for Preparing Lubricating Base Oil (Component (A))]

<(A-1) Component>

A hydrocracked mineral oil [API Group II, kinematic viscosity at 40°C: 8.169 $mm^2/s$, kinematic viscosity at 100°C: 2.355 $mm^2/s$, viscosity index: 104, content of sulfur in the base oil (sulfur content of the base oil): less than 10 mass ppm]

<(A-2) Component>

A hydrocracked mineral oil [API Group II, kinematic viscosity at 40°C: 12.43 $mm^2/s$, kinematic viscosity at 100°C: 3.12 $mm^2/s$, viscosity index: 112, content of sulfur in the base oil (sulfur content of the base oil): less than 10 mass ppm (<10 mass ppm)]

<(A-3) Component>

A hydrocracked mineral oil [API Group III, kinematic viscosity at 40°C: 19.57 $mm^2/s$, kinematic viscosity at 100°C: 4.23 $mm^2/s$, viscosity index: 122, content of sulfur in the base oil (sulfur content of the base oil): less than 10 mass ppm (<10 mass ppm)].

[Regarding Phosphorus-Based Additives (Component (B), Component (C), and the Like)]

<(B-1) Component>

Di(n-butyl) phosphite [phosphorus (P) content: 15.5% by mass, all alkyl groups contained in the structure of the compound have 4 carbon atoms]

<(C-1) Component>

An amine salt of a phosphite ester (distearyl phosphite) [phosphorus (P) content: 24.3% by mass, nitrogen (N) content: 0.30% by mass, all alkyl groups contained in the structure of the compound have 18 carbon atoms]

[(Z-1) Component: Comparative Phosphorus-Based Additive]

Dilauryl hydrogen phosphite [phosphorus (P) content: 6.5% by mass, all alkyl groups contained in the structure of the compound have 12 carbon atoms].

[Regarding Calcium-Based Detergent (Component (D))]

<(D-1) Component>

A calcium sulfonate [base number (perchloric acid method) : 400 mg KOH/g, calcium (Ca) content: 15.5% by mass]

<(D-2) Component>

A calcium phenate [base number (perchloric acid method) : 255 mg KOH/g, calcium (Ca) content: 9.3% by mass, sulfur (S) content: 3.5% by mass]

<(D-3) Component>

A calcium salicylate [base number (perchloric acid method) : 280 mg KOH/g, calcium (Ca) content: 8.1% by mass].

[Regarding Boron-Modified Succinimide-Based Dispersant (Component (E))]

<(E-1) Component>

A boron-modified succinimide [boron (B) content: 2.0% by mass, nitrogen (N) content: 2.3% by mass].

[Regarding Poly(meth)acrylate (Component (F))]

<(F-1) Component>

A poly(meth)acrylate-based pour point depressant [polymethacrylate with a weight-average molecular weight (Mw) of 55800]

<(F-2) Component>

A poly(meth)acrylate-based viscosity modifier [polymethacrylate with a weight-average molecular weight (Mw) of 50000].

<Regarding Other Additives (Component (G))>

<(G-1) Component>

A mixture (total amount: 2.6% by mass) of an antioxidant (1.35% by mass), a metal deactivator (0.05% by mass), a rubber swelling agent (0.6% by mass), and a diluent oil (0.6% by mass).

(Examples 1 to 9 and Comparative Examples 1 to 16)

Lubricating oil compositions of Examples 1 to 9 and Comparative Examples 1 to 16 were prepared by using the aforementioned components to obtain compositions shown in Tables 1 to 3. Note that in the item "Composition" in Tables 1 to 3, "-" indicates that the corresponding component was not used. In addition, in the item "Composition" in Tables 1 to 3, "mass%" represents the content based on mass relative to the total amount of the lubricating oil composition (% by mass), and "inmass%" represents the content based on mass of components (A-1) to (A-3) (constituent base oils of the lubricating base oil) relative to the total amount of the lubricating base oil (% by mass). Furthermore, MP1 shown in Tables 1 to 3 indicates the content of component (B) ((B-1) component) in terms of phosphorus atoms based on mass relative to the total amount of the lubricating oil composition, MP2 indicates the content of component (C) ((C-1) component) in terms of phosphorus atoms based on mass relative to the total amount of the lubricating oil composition, MCa indicates the content of component (D) in terms of calcium atoms based on mass relative to the total amount of the lubricating oil composition, MB indicates the content of component (E) in terms of boron atoms, and "MP1+MP2" indicates the total amount of the content of component (B) ((B-1) component) in terms of phosphorus atoms based on mass relative to the total amount of the lubricating oil composition and the content of component (C) ((C-1) component) in terms of phosphorus atoms based on mass relative to the total amount of the lubricating oil composition. The values of MP1, MP2, MCa, and MB are all values obtained by calculation from the blended amount of each component. For the lubricating oil composition obtained in each Example and the like, the kinematic viscosity at 40°C, the kinematic viscosity at 100°C, and the viscosity index are values measured in accordance with JIS K2283-2000. For the lubricating oil composition obtained in each Example and the like, the volume resistivity is a value measured at an oil temperature of 80°C in accordance with the volume resistivity test specified in JIS C2101.

[Regarding Evaluation Tests on the Properties of the Lubricating Oil Composition Obtained in Each Example and the Like]

<Confirmation Test on Degradation Prevention Performance of Silicone-Containing FIPG by Lubricating Oil Composition>

Using each of the lubricating oil compositions obtained in each Example and the like, the degradation prevention performance of the silicone-containing FIPG and the like were evaluated as follows.

<Confirmation Test on Shape Change of Silicone-Containing FIPG (FIPG Degradation Confirmation Test 1)>

First, an iron plate (iron material: ISOT test catalyst), which is a test piece used for the JIS K 2514-1 Oxidation Stability Test (ISOT), was prepared, 5 g of a silicone-containing FIPG (trade name: 5460, manufactured by Henkel Corporation) was applied to the iron plate, and a test piece on which a coating film of the silicone-containing FIPG was formed was obtained. Next, the test piece on which the coating film of the silicone-containing FIPG was formed was introduced into a 1000 mL beaker containing 500 mL of a lubricating oil composition, and the test piece was immersed in the lubricating oil composition under conditions of 150°C for 288 hours. After immersing the test piece in the 150°C lubricating oil composition for 288 hours in this manner, the test piece was taken out, and the change in the shape of the coating film of the silicone-containing FIPG formed on the test piece was visually confirmed. Based on this, when it could be determined by visual inspection that there was no change in the shape of the coating film, it was evaluated as "E," and when it could be determined that there was a change in the shape of the coating film due to peeling or the like and the coating film was degraded, it was evaluated as "F." The measurement results are shown in Tables 1 to 3.

<Measurement Test on Amount of Silicon Elution from Silicone-Containing FIPG into Lubricating Oil Composition after Use in FIPG Degradation Confirmation Test 1 (FIPG Degradation Confirmation Test 2)>

By using the lubricating oil composition after the test piece was immersed under conditions of 150°C for 288 hours in the above "Confirmation Test on Shape Change of Silicone-Containing FIPG (FIPG Degradation Confirmation Test 1)," the amount of silicon (Si) dissolved in the lubricating oil composition was measured in accordance with JIS K0116 (measured by ICP emission spectrometry). Since it is clear that the silicon measured in this way is silicon eluted from the silicone-containing FIPG, the measured amount of silicon is shown in Tables 1 to 3 as the amount of silicon elution.

In the results of the degradation confirmation tests 1 and 2, a lubricating oil composition for which the evaluation result of the degradation confirmation test 1 is "E" and the amount of silicon elution measured in the degradation confirmation test 2 is "200 mass ppm or less" can be evaluated as having a high level of degradation prevention performance for the silicone-containing FIPG.

<Evaluation Test on Foaming Property of Lubricating Oil Composition After Contact with Silicone-Containing FIPG>

By using the lubricating oil composition after the test piece was immersed under conditions of 150°C for 288 hours in the FIPG Degradation Confirmation Test 1 (Confirmation Test on Shape Change of Silicone-Containing FIPG), the foaming test (Sequence I to Sequence III) specified in JIS K2518 was conducted, and the results of the foaming tendency and foam stability after the test of each sequence (foaming tendency/foam stability) are shown in Tables 1 to 3.

In this test, when the test result of Sequence I is "[a numerical value of 200 or less]/0," the test result of Sequence II is "[a numerical value of 50 or less]/0," and the test result of Sequence III is "[a numerical value of 200 or less]/0," it can be evaluated that the foaming property is low and the performance of suppressing foaming of the composition is at a high level. On the other hand, a lubricating oil composition that does not satisfy at least one of the conditions that the test result of Sequence I is "[a numerical value of 200 or less]/0," the test result of Sequence II is "[a numerical value of 50 or less]/0," and the test result of Sequence III is "[a numerical value of 200 or less]/0" is determined to have low performance of suppressing foaming of the composition.

<Confirmation Test on Extreme Pressure Performance of Lubricating Oil Composition>

<High-Speed Four-Ball Test>

Using each of the lubricating oil compositions obtained in each Example and the like, the maximum non-seizure load (LNSL [unit: N]) was measured by a high-speed four-ball test in accordance with ASTM D2783 at a rotational speed of 1800 rpm. The measurement results are shown in Tables 1 to 3. In this test, it can be understood that the larger the maximum non-seizure load (for example, 619 N or more), the better the wear resistance.

<Shell Four-Ball Test>

Using each of the lubricating oil compositions obtained in each Example and the like, a Shell four-ball test was conducted in accordance with ASTM D4172 under conditions of a load of 392 N, a rotational speed of 1500 rpm, a temperature of 100°C, and a test time of 1 hour, and the wear scar diameter (mm) was measured. The measurement results are shown in Tables 1 to 3. In this test, it can be understood that the smaller the wear scar diameter (for example, 0.60 mm or less), the better the wear resistance.

Based on the results of the confirmation tests on wear resistance by the high-speed four-ball test and the Shell four-ball test, a lubricating oil composition that satisfies both conditions that the LSNL is 619 N or more and the wear scar diameter is 0.60 or less can be evaluated as having a high level of wear resistance (anti-wear performance).

<Falex Seizure Resistance Test>

Using each of the lubricating oil compositions obtained in each Example and the like, and using a Falex test machine (pin-V-block test machine) described in ASTM D3233, the seizure load (unit: N) was measured under test conditions of a temperature of 110°C and a rotational speed of 290 rpm. The results thus obtained are shown in Tables 1 to 3. When such a seizure load is 4000 N or more, it can be evaluated that the seizure resistance (extreme pressure property between steel) is excellent.

<Unisteel Test (Thrust Needle BRG)>

Using each of the lubricating oil compositions obtained in each Example and the like, and using a Unisteel rolling

fatigue test machine (manufactured by Tokyo Koki Testing Machine Co., Ltd., three-unit high-temperature rolling fatigue test machine (TRF-1000/3-01H)), the rolling fatigue life of a thrust bearing was measured by the Unisteel test (Institute of Petroleum method: IP305/79). Regarding a test bearing in which one side of the raceway ring of a thrust needle bearing (FNTA-2542C manufactured by NSK Ltd.) was replaced with a flat test piece (material: SUJ2), the time until either the roller or the test piece suffered fatigue damage was measured under conditions of a load of 7000 N, a surface pressure of 1 GPa, a rotational speed of 1450 rpm, and an oil temperature of 120°C. It was determined that fatigue damage had occurred when the vibration acceleration of the test section measured by a vibration accelerometer provided in the Unisteel rolling fatigue test machine reached 1.5 $m/s^2$. From the time to fatigue damage in 10 repeated tests, the fatigue life was calculated as a 50% life (L50: time at which the cumulative probability becomes 50%) by a Weibull plot. The results are shown in Tables 1 to 3. If the 50% life measured in this test is 2000 minutes or more, it can be determined that there is an effect of improving the fatigue life (pitting life) (an effect of extending the fatigue life).

<Confirmation Test on Power Consumption Efficiency of Lubricating Oil Composition>

<Evaluation of Power Consumption Efficiency (Fuel Economy)>

Using each of the lubricating oil compositions obtained in each Example and the like, the kinematic viscosity at 25°C, which is the test start temperature in the fuel economy test in the WLTC mode, was measured in accordance with JIS K 2283-2000, and the power consumption efficiency was evaluated from the value of the kinematic viscosity at 25°C. The results thus obtained are shown in Tables 1 to 3. When the kinematic viscosity at 25°C (kinematic viscosity at low temperature) is 20 $mm^2/s$ or less, the resistance (stirring loss) due to lubrication oil stirring by rotating bodies such as gears at the start of the fuel economy test can be reduced, so it can be evaluated as having excellent power consumption efficiency.

[Table 1]

| | | | | | Example 1 | Example 2 | Example 3 | Example 4 | Example 5 | Example 6 | Example 7 | Example 8 | Example 9 |
|---|---|---|---|---|---|---|---|---|---|---|---|---|---|
| Composition | Component (A) | (A-1) Component (Base Oil) | Content in Lubricating Base Oil | inmass% | 37 | 37 | 37 | 37 | 37 | 37 | 37 | 37 | 37 |
| | | (A-2) Component (Base Oil) | Content in Lubricating Base Oil | inmass% | 63 | 63 | 63 | 63 | 63 | 63 | 63 | 63 | 63 |
| | | (A-3) Component (Base Oil) | Content in Lubricating Base Oil | inmass% | - | - | - | - | - | - | - | - | - |
| | | Properties of Component (A) | Kinematic Viscosity at 40°C | $mm^2/s$ | 10.6 | 10.6 | 10.6 | 10.6 | 10.6 | 10.6 | 10.6 | 10.6 | 10.6 |
| | | | Kinematic Viscosity at 100°C | $mm^2/s$ | 2.8 | 2.8 | 2.8 | 2.8 | 2.8 | 2.8 | 2.8 | 2.8 | 2.8 |
| | | | Viscosity Index | - | 109 | 109 | 109 | 109 | 109 | 109 | 109 | 109 | 109 |
| | Component (B) | (B-1) Component | Content in Composition | mass% | 0.14 | 0.17 | 0.21 | 0.13 | 0.14 | 0.14 | 0.14 | 0.14 | 0.14 |
| | | | MP1 | mass% | 0.022 | 0.026 | 0.033 | 0.020 | 0.022 | 0.022 | 0.022 | 0.022 | 0.022 |
| | Component (C) | (C-1) Component | Content in Composition | mass% | 0.40 | 0.50 | 0.62 | 0.42 | 0.38 | 0.40 | 0.40 | 0.40 | 0.40 |
| | | | MP2 | mass% | 0.010 | 0.012 | 0.015 | 0.010 | 0.009 | 0.010 | 0.010 | 0.010 | 0.010 |
| | Comparative Phosphorus-Based Additive | (Z-1) Component | Content in Composition | mass% | - | - | - | - | - | - | - | - | - |
| | Component (D) | (D-1) Component | Content in Composition | mass% | 0.070 | 0.070 | 0.070 | 0.070 | 0.070 | - | - | 0.055 | 0.083 |
| | | (D-2) Component | Content in Composition | mass% | - | - | - | - | - | 0.120 | - | - | - |
| | | (D-3) Component | Content in Composition | mass% | - | - | - | - | - | - | 0.130 | - | - |
| | | MCa | | mass% | 0.011 | 0.011 | 0.011 | 0.011 | 0.011 | 0.011 | 0.011 | 0.009 | 0.013 |
| | Component (E) | (E-1) Component | Content in Composition | mass% | 0.60 | 0.60 | 0.60 | 0.60 | 0.60 | 0.60 | 0.60 | 0.40 | 0.74 |
| | | | MB | mass% | 0.012 | 0.012 | 0.012 | 0.012 | 0.012 | 0.012 | 0.012 | 0.008 | 0.015 |
| | Component (F) | (F-1) Component | Content in Composition | mass% | 0.05 | 0.05 | 0.05 | 0.05 | 0.05 | 0.05 | 0.05 | 0.05 | 0.05 |
| | | (F-2) Component | Content in Composition | mass% | - | - | - | - | - | - | - | - | - |
| | Component (G) | (G-1) Component | Content in Composition | mass% | 2.6 | 2.6 | 2.6 | 2.6 | 2.6 | 2.6 | 2.6 | 2.6 | 2.6 |
| | Other Content Ratios, etc. | MP1 + MP2 | | mass% | 0.031 | 0.039 | 0.048 | 0.030 | 0.031 | 0.031 | 0.031 | 0.031 | 0.031 |
| | | MP1/MP2 | | - | 2.2 | 2.2 | 2.2 | 2.0 | 2.4 | 2.2 | 2.2 | 2.2 | 2.2 |
| | | MB/MCa | | - | 1.1 | 1.1 | 1.1 | 1.1 | 1.1 | 1.1 | 1.1 | 0.9 | 1.2 |
| Properties of Lubricating Oil Composition | | Kinematic Viscosity at 40°C | | $mm^2/s$ | 10.7 | 10.7 | 10.7 | 10.7 | 10.7 | 10.7 | 10.8 | 10.7 | 10.8 |
| | | Kinematic Viscosity at 100°C | | $mm^2/s$ | 2.8 | 2.8 | 2.8 | 2.8 | 2.8 | 2.8 | 2.8 | 2.8 | 2.8 |
| | | Viscosity Index | | - | 106 | 106 | 106 | 106 | 106 | 106 | 105 | 106 | 105 |
| | | Volume Resistivity (80°C) | | MΩ·m | 54 | 53 | 52 | 54 | 54 | 52 | 53 | 54 | 51 |
| | | FIPG Degradation Confirmation Test 1 (Visual Observation of Shape) | | - | E | E | E | E | E | E | E | E | E |
| | | FIPG Degradation Confirmation Test 2 (Amount of Silicon Elution) | | massppm | 70 | 120 | 160 | 78 | 82 | 140 | 135 | 155 | 73 |
| | | Evaluation Test on Foaming Property | Sequence I | ml/ml | 150/0 | 140/0 | 170/0 | 130/0 | 150/0 | 160/0 | 150/0 | 140/0 | 160/0 |
| | | | Sequence II | ml/ml | 30/0 | 30/0 | 30/0 | 30/0 | 30/0 | 40/0 | 40/0 | 30/0 | 30/0 |
| | | | Sequence III | ml/ml | 140/0 | 140/0 | 170/0 | 140/0 | 150/0 | 150/0 | 150/0 | 150/0 | 150/0 |
| | | High-Speed Four-Ball Test (LNSL) | | N | 785 | 785 | 785 | 785 | 785 | 785 | 785 | 785 | 785 |
| | | Shell Four-Ball Test | | mm | 0.55 | 0.51 | 0.50 | 0.56 | 0.57 | 0.58 | 0.57 | 0.56 | 0.53 |
| | | Falex Seizure Test | | N | 4226 | 4404 | 4226 | 4181 | 4181 | 4359 | 4092 | 4359 | 4048 |
| | | Unisteel Test (L50) | | min | 2534 | 2532 | 2612 | 2587 | 2511 | 2662 | 2389 | 2551 | 2486 |
| | | Power Consumption Efficiency (Kinematic Viscosity at 25°C) | | $mm^2/s$ | 18 | 18 | 18 | 18 | 18 | 18 | 18 | 18 | 18 |

[Table 2]

| | | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|
| Composition | Component (A) | (A-1) Component (Base Oil) | Content in Lubricating Base Oil | inmass% | 70 | 49 | - | 37 | 37 | 37 | 37 | 37 | 37 |
| | | (A-2) Component (Base Oil) | Content in Lubricating Base Oil | inmass% | 30 | - | - | 63 | 63 | 63 | 63 | 63 | 63 |
| | | (A-3) Component (Base Oil) | Content in Lubricating Base Oil | inmass% | - | 51 | 100 | - | - | - | - | - | - |
| | | Properties of Component (A) | Kinematic Viscosity at 40°C | mm$^2$/s | 9.2 | 12.4 | 19.6 | 10.6 | 10.6 | 10.6 | 10.6 | 10.6 | 10.6 |
| | | | Kinematic Viscosity at 100°C | mm$^2$/s | 2.6 | 3.1 | 4.2 | 2.8 | 2.8 | 2.8 | 2.8 | 2.8 | 2.8 |
| | | | Viscosity Index | - | 106 | 112 | 122 | 109 | 109 | 109 | 109 | 109 | 109 |
| | Component (B) | (B-1) Component | Content in Composition | mass% | 0.14 | 0.14 | 0.14 | 0.14 | 0.14 | 0.20 | - | - | 0.09 |
| | | | MP1 | mass% | 0.022 | 0.022 | 0.022 | 0.022 | 0.022 | 0.031 | 0.000 | 0.000 | 0.014 |
| | Component (C) | (C-1) Component | Content in Composition | mass% | 0.40 | 0.40 | 0.40 | 0.40 | 0.40 | - | 1.28 | - | 0.26 |
| | | | MP2 | mass% | 0.010 | 0.010 | 0.010 | 0.010 | 0.010 | 0.000 | 0.031 | 0.000 | 0.006 |
| | Comparative Phosphorus-Based Additive | (Z-1) Component | Content in Composition | mass% | - | - | - | - | - | - | - | 0.47 | - |
| | Component (D) | (D-1) Component | Content in Composition | mass% | 0.070 | 0.070 | 0.070 | 0.070 | 0.070 | 0.070 | 0.070 | 0.070 | 0.070 |
| | | (D-2) Component | Content in Composition | mass% | - | - | - | - | - | - | - | - | - |
| | | (D-3) Component | Content in Composition | mass% | - | - | - | - | - | - | - | - | - |
| | | MCa | | mass% | 0.011 | 0.011 | 0.011 | 0.011 | 0.011 | 0.011 | 0.011 | 0.011 | 0.011 |
| | Component (E) | (E-1) Component | Content in Composition | mass% | 0.60 | 0.60 | 0.60 | 0.60 | 0.60 | 0.60 | 0.60 | 0.60 | 0.60 |
| | | | MB | mass% | 0.012 | 0.012 | 0.012 | 0.012 | 0.012 | 0.012 | 0.012 | 0.012 | 0.012 |
| | Component (F) | (F-1) Component | Content in Composition | mass% | 0.05 | 0.05 | 0.05 | 0.05 | 0.05 | 0.05 | 0.05 | 0.05 | 0.05 |
| | | (F-2) Component | Content in Composition | mass% | - | - | - | 1.5 | 5.7 | - | - | - | - |
| | Component (G) | (G-1) Component | Content in Composition | mass% | 2.6 | 2.6 | 2.6 | 2.6 | 2.6 | 2.6 | 2.6 | 2.6 | 2.6 |
| | Other Content Ratios, etc. | MP1 + MP2 | | mass% | 0.031 | 0.031 | 0.031 | 0.031 | 0.031 | 0.031 | 0.031 | 0.031 | 0.020 |
| | | MP1/MP2 | | - | 2.2 | 2.2 | 2.2 | 2.2 | 2.2 | - | - | - | 2.2 |
| | | MB/MCa | | - | 1.1 | 1.1 | 1.1 | 1.1 | 1.1 | 1.1 | 1.1 | 1.1 | 1.1 |
| Properties of Lubricating Oil Composition | | Kinematic Viscosity at 40°C | | mm$^2$/s | 9.4 | 12.5 | 19.6 | 13.4 | 21.3 | 10.7 | 10.7 | 10.7 | 10.7 |
| | | Kinematic Viscosity at 100°C | | mm$^2$/s | 2.6 | 3.1 | 4.3 | 3.6 | 5.7 | 2.8 | 2.8 | 2.8 | 2.8 |
| | | Viscosity Index | | - | 100 | 108 | 124 | 155 | 230 | 106 | 105 | 106 | 106 |
| | | Volume Resistivity (80°C) | | MΩ·m | 51 | 58 | 60 | 60 | 62 | 53 | 42 | 43 | 55 |
| | | FIPG Degradation Confirmation Test 1 (Visual Observation of Shape) | | - | F | E | E | E | E | F | F | F | E |
| | | FIPG Degradation Confirmation Test 2 (Amount of Silicon Elution) | | massppm | 340 | 97 | 99 | 140 | 110 | 360 | 120 | 240 | 100 |
| | | Evaluation Test on Foaming Property | Sequence I | ml/ml | 430/0 | 210/0 | 490/0 | 390/0 | 470/0 | 470/0 | 160/0 | 180/0 | 110/0 |
| | | | Sequence II | ml/ml | 40/0 | 40/0 | 40/0 | 40/0 | 70/0 | 50/0 | 30/0 | 30/0 | 30/0 |
| | | | Sequence III | ml/ml | 410/0 | 200/0 | 490/0 | 370/0 | 470/0 | 480/0 | 150/0 | 180/0 | 100/0 |
| | | High-Speed Four-Ball Test (LNSL) | | N | 618 | 785 | 618 | 618 | 785 | 981 | 392 | 392 | 490 |
| | | Shell Four-Ball Test | | mm | 0.52 | 0.55 | 0.70 | 0.81 | 0.67 | 0.52 | 0.78 | 0.74 | 0.73 |
| | | Falex Seizure Test | | N | 4092 | 5160 | 4181 | 4181 | 4359 | 3915 | 3069 | 3470 | 3425 |
| | | Unisteel Test (L50) | | min | 2399 | 2701 | 3001 | 2155 | 2432 | 1987 | 1878 | 1899 | 1977 |
| | | Power Consumption Efficiency (Kinematic Viscosity at 25°C) | | mm$^2$/s | 16 | 22 | 36 | 22 | 35 | 18 | 18 | 18 | 18 |

[Table 3]

| | | | | Unit | Comparative Example 10 | Comparative Example 11 | Comparative Example 12 | Comparative Example 13 | Comparative Example 14 | Comparative Example 15 | Comparative Example 16 |
|---|---|---|---|---|---|---|---|---|---|---|---|
| Composition | Component (A) | (A-1) Component (Base Oil) | Content in Lubricating Base Oil | inmass% | 37 | 37 | 37 | 37 | 37 | 37 | 37 |
| | | (A-2) Component (Base Oil) | Content in Lubricating Base Oil | inmass% | 63 | 63 | 63 | 63 | 63 | 63 | 63 |
| | | (A-3) Component (Base Oil) | Content in Lubricating Base Oil | inmass% | - | - | - | - | - | - | - |
| | | Properties of Component (A) | Kinematic Viscosity at 40°C | $mm^2/s$ | 10.6 | 10.6 | 10.6 | 10.6 | 10.6 | 10.6 | 10.6 |
| | | | Kinematic Viscosity at 100°C | $mm^2/s$ | 2.8 | 2.8 | 2.8 | 2.8 | 2.8 | 2.8 | 2.8 |
| | | | Viscosity Index | - | 109 | 109 | 109 | 109 | 109 | 109 | 109 |
| | Component (B) | (B-1) Component | Content in Composition | mass% | 0.26 | 0.14 | 0.17 | 0.14 | 0.14 | 0.14 | 0.14 |
| | | | MP1 | mass% | 0.040 | 0.022 | 0.026 | 0.022 | 0.022 | 0.022 | 0.022 |
| | Component (C) | (C-1) Component | Content in Composition | mass% | 0.76 | 0.53 | 0.40 | 0.40 | 0.40 | 0.40 | 0.40 |
| | | | MP2 | mass% | 0.018 | 0.013 | 0.010 | 0.010 | 0.010 | 0.010 | 0.010 |
| | Comparative Phosphorus-Based Additive | (Z-1) Component | Content in Composition | mass% | - | - | - | - | - | - | - |
| | Component (D) | (D-1) Component | Content in Composition | mass% | 0.070 | 0.070 | 0.070 | 0.050 | 0.120 | 0.070 | 0.070 |
| | | (D-2) Component | Content in Composition | mass% | - | - | - | - | - | - | - |
| | | (D-3) Component | Content in Composition | mass% | - | - | - | - | - | - | - |
| | | MCa | | mass% | 0.011 | 0.011 | 0.011 | 0.008 | 0.019 | 0.011 | 0.011 |
| | Component (E) | (E-1) Component | Content in Composition | mass% | 0.60 | 0.60 | 0.60 | 0.60 | 0.60 | 0.30 | 1.00 |
| | | | MB | mass% | 0.012 | 0.012 | 0.012 | 0.012 | 0.012 | 0.006 | 0.020 |
| | Component (F) | (F-1) Component | Content in Composition | mass% | 0.05 | 0.05 | 0.05 | 0.05 | 0.05 | 0.05 | 0.05 |
| | | (F-2) Component | Content in Composition | mass% | - | - | - | - | - | - | - |
| | Component (G) | (G-1) Component | Content in Composition | mass% | 2.6 | 2.6 | 2.6 | 2.6 | 2.6 | 2.6 | 2.6 |
| | Other Content Ratios, etc. | MP1 + MP2 | | mass% | 0.059 | 0.035 | 0.036 | 0.031 | 0.031 | 0.031 | 0.031 |
| | | MP1/MP2 | | - | 2.2 | 1.7 | 2.7 | 2.2 | 2.2 | 2.2 | 2.2 |
| | | MB/MCa | | - | 1.1 | 1.1 | 1.1 | 1.5 | 0.6 | 0.6 | 1.8 |
| Properties of Lubricating Oil Composition | | Kinematic Viscosity at 40°C | | $mm^2/s$ | 10.7 | 10.7 | 10.7 | 10.7 | 10.8 | 10.7 | 10.7 |
| | | Kinematic Viscosity at 100°C | | $mm^2/s$ | 2.8 | 2.8 | 2.8 | 2.8 | 2.8 | 2.8 | 2.8 |
| | | Viscosity Index | | - | 104 | 105 | 106 | 106 | 106 | 106 | 106 |
| | | Volume Resistivity (80°C) | | MΩ·m | 47 | 49 | 52 | 59 | 23 | 58 | 44 |
| | | FIPG Degradation Confirmation Test 1 (Visual Observation of Shape) | | - | F | F | F | F | F | F | E |
| | | FIPG Degradation Confirmation Test 2 (Amount of Silicon Elution) | | massppm | 310 | 270 | 310 | 210 | 87 | 330 | 100 |
| | | Evaluation Test on Foaming Property | Sequence I | ml/ml | 230/0 | 220/0 | 250/0 | 410/0 | 300/0 | 310/0 | 190/0 |
| | | | Sequence II | ml/ml | 40/0 | 30/0 | 40/0 | 50/0 | 40/0 | 40/0 | 30/0 |
| | | | Sequence III | ml/ml | 360/0 | 210/0 | 250/0 | 430/0 | 310/0 | 300/0 | 200/0 |
| | | High-Speed Four-Ball Test (LNSL) | | N | 981 | 618 | 618 | 785 | 981 | 981 | 618 |
| | | Shell Four-Ball Test | | mm | 0.41 | 0.69 | 0.53 | 0.58 | 0.63 | 0.52 | 0.67 |
| | | Falex Seizure Test | | N | 4982 | 3915 | 4181 | 4092 | 3069 | 4626 | 3470 |
| | | Unisteel Test (L50) | | min | 2443 | 2339 | 1956 | 1991 | 1879 | 1659 | 1882 |
| | | Power Consumption Efficiency (Kinematic Viscosity at 25°C) | | $mm^2/s$ | 18 | 18 | 18 | 18 | 18 | 18 | 18 |

As is clear from the results shown in Tables 1 to 3, it was found that the lubricating oil compositions obtained in Examples 1 to 9 (corresponding to the lubricating oil compositions for a gear-type transmission for e-mobility of the present invention) can highly suppress the degradation of the silicone-containing FIPG, can keep the foaming during use to a specific level or less, and are capable of improving power consumption efficiency with a low viscosity. It was also found that the lubricating oil compositions obtained in Examples 1 to 9 (corresponding to the lubricating oil compositions for a gear-type transmission for e-mobility of the present invention) are capable of improving both extreme pressure performance based on anti-wear performance and seizure resistance performance, and fatigue life. Furthermore, it became clear from the results of the volume resistivity that the lubricating oil compositions obtained in Examples 1 to 9 (corresponding to the

lubricating oil compositions for a gear-type transmission for e-mobility of the present invention) also have the high level of electrical insulation properties required for lubricating oils for e-mobility (for example, electric vehicles and other such electric automobiles).

In contrast, when the kinematic viscosity at 100°C of the lubricating base oil used in the composition was less than 2.7 $mm^2/s$ (Comparative Example 1), the degradation prevention performance of the silicone-containing FIPG could not be brought to a high level, and the performance of suppressing foaming of the composition was also low. When the kinematic viscosity at 40°C of the lubricating base oil used in the composition exceeded 12.0 $mm^2/s$ (Comparative Examples 2 and 3), it was found that the performance of suppressing foaming of the composition became low and the power consumption efficiency became low. Furthermore, in all cases where the content of poly(meth)acrylate was 0.1% by mass or more (Comparative Examples 4 and 5), the performance of suppressing foaming of the composition became low, and the power consumption efficiency became low. In Comparative Examples 3 to 5, it was also not possible to achieve a high level of wear resistance (anti-wear performance).

When only one type of phosphorus-based additive was used as the phosphorus-based additive (Comparative Examples 6 to 8), it was mainly not possible to bring the degradation prevention performance of the silicone-containing FIPG to a high level, and it was also not possible to achieve excellent seizure resistance and fatigue life. Even when two types of phosphorus-based additives were used, when the total amount of the content of those phosphorus-based additives in terms of phosphorus atoms (MP1+MP2) was less than 0.025% by mass based on the total mass of the lubricating oil composition (Comparative Example 9), it was not possible to bring the degradation prevention performance of the silicone-containing FIPG to a high level, and it was not possible to make all of the effects of improving wear resistance (anti-wear performance), seizure resistance, and fatigue life excellent. Furthermore, even when two types of phosphorus-based additives were used, when the total amount of the content of the phosphorus-based additives in terms of phosphorus atoms (MP1+MP2) exceeded 0.050% by mass based on the total mass of the lubricating oil composition (Comparative Example 10), it was not possible to bring the degradation prevention performance of the silicone-containing FIPG to a high level, and the performance of suppressing foaming of the composition also became low. Even when two types of phosphorus-based additives were used, when the magnitude of MP1 was not in the range of 2.0 times or more and 2.4 times or less the magnitude of MP2 (Comparative Examples 11 and 12), it was not possible to bring the degradation prevention performance of the silicone-containing FIPG to a high level, the performance of suppressing foaming of the composition also became low, and it was not possible to make the wear resistance excellent (in Comparative Example 11, it was also not possible to make the seizure resistance excellent, and in Comparative Example 12, it was also not possible to make the fatigue life excellent). When the content MCa of component (D) in terms of calcium atoms based on the total mass of the lubricating oil composition was not in the range of 0.009% by mass or more and 0.013% by mass or less (Comparative Examples 13 and 14), it was not possible to bring the degradation prevention performance of the silicone-containing FIPG to a high level, the performance of suppressing foaming of the composition also became low, and it was not possible to make the fatigue life excellent (in Comparative Example 14, it was also not possible to make the wear resistance and seizure resistance excellent). When the content MB of component (E) in terms of boron atoms was not in the range of 0.9 times or more and 1.2 times or less the content MCa of component (D) in terms of calcium atoms (Comparative Examples 15 and 16), the performance of suppressing foaming of the composition became low, and the fatigue life was not excellent (in Comparative Example 15, it was also not possible to bring the degradation prevention performance of the silicone-containing FIPG to a high level, and in Comparative Example 16, it was also not possible to make the wear resistance and seizure resistance excellent).

From these results, it was found that with a lubricating oil composition containing the components (A) to (F) and satisfying all of the conditions (i) to (vi), for a gear-type transmission for e-mobility (for example, a reducer for an electric vehicle) in which the joint portion is sealed with a silicone-containing FIPG, it is possible to prevent the degradation of the silicone-containing FIPG during use, to prevent oil leakage from the joint portion over a long period of time, and also, since the foaming suppression ability during use is high, it is possible to highly prevent a situation where oil spouts from the breather of the gear-type transmission; furthermore, it was found that it is also possible to achieve a high level of the properties required for a lubricating oil composition used in e-mobility (performance of improving extreme pressure performance and fatigue life of gears and the like, and fuel economy performance).

Industrial Applicability

As described above, the present invention makes it possible: (1) to provide a gear-type transmission for e-mobility that can highly suppress the degradation of a silicone-containing FIPG caused by the lubricating oil composition during use of the gear-type transmission and can keep the foaming of the lubricating oil composition during use of the gear-type transmission to a specific level or less, and that can also achieve both an improvement in power consumption efficiency and an improvement in fatigue life; (2) to provide a lubricating oil composition for a gear-type transmission for e-mobility that can highly suppress the degradation of a silicone-containing FIPG and can keep foaming during use to a specific level or less, and that, while having a low viscosity and being capable of improving power consumption efficiency,

can also improve both extreme pressure performance based on anti-wear performance and seizure resistance performance as well as fatigue life, and that can also have the high electrical insulation properties required for lubricating oils for e-mobility; and (3) to provide a method for lubricating a gear-type transmission for e-mobility using the lubricating oil composition.

Such a lubricating oil composition for a gear-type transmission for e-mobility of the present invention is very useful for improving the power consumption performance, fatigue life, and the like of e-mobility by being used in a gear-type transmission (for example, a reducer, etc.) of e-mobility that uses a silicone-containing FIPG as a sealing agent for a joint portion.

## Claims

**1.** A gear-type transmission for e-mobility, comprising a lubricating oil composition for lubricating a sliding portion, and a joint portion using, at least in part, a form-in-place gasket containing silicone as a sealing member for the lubricating oil composition, wherein

the lubricating oil composition comprises:

(A) a lubricating base oil that is a hydrocracked mineral oil having a kinematic viscosity at 40°C of 12.0 $mm^2/s$ or less and a kinematic viscosity at 100°C of 2.7 $mm^2/s$ or more;
(B) a first phosphorus-based additive containing at least one alkyl group in the structure, wherein all of the alkyl groups contained in the structure have 8 or less carbon atoms;
(C) a second phosphorus-based additive containing at least one alkyl group in the structure, wherein all of the alkyl groups contained in the structure have 14 or more carbon atoms;
(D) a calcium-based detergent;
(E) a boron-modified succinimide-based dispersant; and
(F) a poly(meth)acrylate,

and satisfies all of the following conditions (i) to (vi):

(i) a total amount of a content of the component (B) in terms of phosphorus atoms and a content of the component (C) in terms of phosphorus atoms is 0.025% by mass or more and 0.050% by mass or less based on a total mass of the lubricating oil composition;
(ii) a content of the component (B) in terms of phosphorus atoms based on the total mass of the lubricating oil composition is 2.0 times or more and 2.4 times or less a content of the component (C) in terms of phosphorus atoms based on the total mass of the lubricating oil composition;
(iii) a content of the component (D) in terms of calcium atoms is 0.009% by mass or more and 0.013% by mass or less based on the total mass of the lubricating oil composition;
(iv) a content of the component (E) in terms of boron atoms based on the total mass of the lubricating oil composition is 0.9 times or more and 1.2 times or less a content of the component (D) in terms of calcium atoms based on the total mass of the lubricating oil composition;
(v) a content of the component (F) is less than 0.1% by mass based on the total mass of the lubricating oil composition; and
(vi) the lubricating oil composition has a volume resistivity at 80°C of 50 $M\Omega\cdot m$ or more, a kinematic viscosity at 100°C of 2.7 $mm^2/s$ or more and 3.0 $mm^2/s$ or less, and a viscosity index of 100 or more.

**2.** The gear-type transmission for e-mobility according to claim 1, wherein the component (B) is a phosphite ester in which all of the alkyl groups contained in the structure are alkyl groups having 8 or less carbon atoms.

**3.** The gear-type transmission for e-mobility according to claim 1, wherein the component (C) is an amine salt of a phosphite ester in which all of the alkyl groups contained in the structure are alkyl groups having 14 or more carbon atoms.

**4.** The gear-type transmission for e-mobility according to claim 1, wherein the component (D) is at least one selected from the group consisting of a calcium sulfonate having a base number of 200 mg KOH/g or more, a calcium phenate having a base number of 200 mg KOH/g or more, and a calcium salicylate having a base number of 200 mg KOH/g or more.

**5.** The gear-type transmission for e-mobility according to claim 1, wherein the component (F) has a weight-average molecular weight of 60,000 or less.

**6.** A lubricating oil composition used for lubricating a sliding portion of a gear-type transmission for e-mobility provided with a joint portion using, at least in part, a form-in-place gasket containing silicone as a sealing member for the lubricating oil composition, wherein

the lubricating oil composition comprises:

(A) a lubricating base oil that is a hydrocracked mineral oil having a kinematic viscosity at 40°C of 12.0 $mm^2/s$ or less and a kinematic viscosity at 100°C of 2.7 $mm^2/s$ or more;
(B) a first phosphorus-based additive containing at least one alkyl group in the structure, wherein all of the alkyl groups contained in the structure have 8 or less carbon atoms;
(C) a second phosphorus-based additive containing at least one alkyl group in the structure, wherein all of the alkyl groups contained in the structure have 14 or more carbon atoms;
(D) a calcium-based detergent;
(E) a boron-modified succinimide-based dispersant; and
(F) a poly(meth)acrylate,

and satisfies all of the following conditions (i) to (vi):

(i) a total amount of a content of the component (B) in terms of phosphorus atoms and a content of the component (C) in terms of phosphorus atoms is 0.025% by mass or more and 0.050% by mass or less based on a total mass of the lubricating oil composition;
(ii) a content of the component (B) in terms of phosphorus atoms based on the total mass of the lubricating oil composition is 2.0 times or more and 2.4 times or less a content of the component (C) in terms of phosphorus atoms based on the total mass of the lubricating oil composition;
(iii) a content of the component (D) in terms of calcium atoms is 0.009% by mass or more and 0.013% by mass or less based on the total mass of the lubricating oil composition;
(iv) a content of the component (E) in terms of boron atoms based on the total mass of the lubricating oil composition is 0.9 times or more and 1.2 times or less a content of the component (D) in terms of calcium atoms based on the total mass of the lubricating oil composition;
(v) a content of the component (F) is less than 0.1% by mass based on the total mass of the lubricating oil composition; and
(vi) the lubricating oil composition has a volume resistivity at 80°C of 50 $M\Omega \cdot m$ or more, a kinematic viscosity at 100°C of 2.7 $mm^2/s$ or more and 3.0 $mm^2/s$ or less, and a viscosity index of 100 or more.

**7.** A method for lubricating a gear-type transmission for e-mobility, comprising lubricating a sliding portion of a gear-type transmission for e-mobility provided with a joint portion using, at least in part, a form-in-place gasket containing silicone as a sealing member for the lubricating oil composition with the lubricating oil composition for a gear-type transmission for e-mobility according to claim 6.

## INTERNATIONAL SEARCH REPORT

International application No.
**PCT/JP2024/037774**

### A. CLASSIFICATION OF SUBJECT MATTER

***C10M 169/04***(2006.01)i; ***F16H 57/04***(2010.01)i; *C10M 101/02*(2006.01)n; *C10M 137/02*(2006.01)n; *C10M 139/00*(2006.01)n; *C10M 145/14*(2006.01)n; *C10M 159/22*(2006.01)n; *C10N 10/04*(2006.01)n; *C10N 20/02*(2006.01)n; *C10N 30/00*(2006.01)n; *C10N 30/02*(2006.01)n; *C10N 30/04*(2006.01)n; *C10N 30/06*(2006.01)n; *C10N 30/18*(2006.01)n; *C10N 40/00*(2006.01)n; *C10N 40/04*(2006.01)n

FI: C10M169/04; F16H57/04 Z; C10M101/02; C10N30:04; C10N30:02; C10N40:00 D; C10N40:04; C10M137/02; C10M145/14; C10N10:04; C10N20:02; C10N30:18; C10N30:06; C10N30:00 Z; C10M159/22; C10M139/00 A

According to International Patent Classification (IPC) or to both national classification and IPC

### B. FIELDS SEARCHED

Minimum documentation searched (classification system followed by classification symbols)

C10M169/04; F16H57/04; C10M101/02; C10M137/02; C10M139/00; C10M145/14; C10M159/22; C10N10/04; C10N20/02; C10N30/00; C10N30/02; C10N30/04; C10N30/06; C10N30/18; C10N40/00; C10N40/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-041055 A (EMG LUBRICANTS GODO KAISHA) 19 March 2020 (2020-03-19) claims, paragraphs [0008], [0095], examples | 1-7 |
| A | JP 2021-066809 A (EMG LUBRICANTS GODO KAISHA) 30 April 2021 (2021-04-30) entire text, all drawings | 1-7 |
| A | WO 2020/189580 A1 (JXTG NIPPON OIL & ENERGY CORPORATION) 24 September 2020 (2020-09-24) entire text, all drawings | 1-7 |
| P, A | JP 2024-013502 A (ENEOS CORPORATION) 01 February 2024 (2024-02-01) entire text, all drawings | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 December 2024** | **07 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

INTERNATIONAL SEARCH REPORT

International application No.
**PCT/JP2024/037774**

C. DOCUMENTS CONSIDERED TO BE RELEVANT

| Category* | Citation of document, with indication, where appropriate, of the relevant passages | Relevant to claim No. |
|---|---|---|
| P, A | JP 2024-013503 A (ENEOS CORPORATION) 01 February 2024 (2024-02-01) entire text, all drawings | 1-7 |
| P, A | JP 2024-013504 A (ENEOS CORPORATION) 01 February 2024 (2024-02-01) entire text, all drawings | 1-7 |

Form PCT/ISA/210 (second sheet) (July 2022)

**INTERNATIONAL SEARCH REPORT**
**Information on patent family members**

International application No.
**PCT/JP2024/037774**

| Patent document cited in search report | Publication date (day/month/year) | Patent family member(s) | Publication date (day/month/year) |
|---|---|---|---|
| JP 2020-041055 A | 19 March 2020 | (Family: none) | |
| JP 2021-066809 A | 30 April 2021 | (Family: none) | |
| WO 2020/189580 A1 | 24 September 2020 | US 2022/0145208 A1<br>entire text, all drawings<br>EP 3943582 A1<br>CN 113454193 A | |
| JP 2024-013502 A | 01 February 2024 | WO 2024/019027 A1<br>entire text, all drawings | |
| JP 2024-013503 A | 01 February 2024 | (Family: none) | |
| JP 2024-013504 A | 01 February 2024 | WO 2024/019027 A1<br>entire text, all drawings | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020189580 A
- JP 2020076004 A
- JP 2022090378 A
- JP 2009108157 A